# FASCICULE DE BREVET EUROPEEN

(11) **EP 0 804 879 B1**
(45) Date de publication et mention de la délivrance du brevet: **28.03.2001**
(21) Numéro de dépôt: 96402410.3
(22) Date de dépôt: 12.11.1996
(51) Int. Cl.: A21C 11/12

(54) **Machine à grigner**
Ritzvorrichtung
Scoring machine

(30) Priorité: 15.11.1995 FR 9513525
(43) Date de publication de la demande: 05.11.1997
(73) Titulaire: Pan Eiffel, 78830 Bonnelles (FR)
(72) Inventeur: VERGNIER, Jean Pierre, F-94400 Vitry/Seine (FR); GODARD, Pierre, F-77240 Cesson la Forêt (FR)

(56) Documents cités:
- FR-A- 2 340 050
- FR-A- 2 410 438
- FR-A- 2 579 870
- FR-A- 2 625 648
- FR-A- 2 662 913
- FR-A- 2 706 249

## Description

La présente invention concerne une machine à grigner des produits de boulangerie ou de viennoiserie disposés dans un filet comportant une pluralité d'alvéoles.

L'invention trouve une application particulièrement avantageuse dans le domaine de l'industrie de la boulangerie et de la viennoiserie.

En boulangerie et viennoiserie, il est habituel d'effectuer sur les produits encore sous forme de pâte une opération dite de grignage qui consiste à réaliser, avant cuisson, des fentes, ou grignes, par scarification à la surface de la pâte. Le produit ainsi grigné peut alors être cuit au four dans les meilleures conditions quant au gonflement de la pâte.

Le plus souvent, les fentes, ou grignes, sont obtenues manuellement par l'opérateur, le boulanger ou un assistant, à l'aide d'un outil de coupe tel qu'un couteau. On comprend que l'opération de grignage menée de cette manière s'avère longue et fastidieuse quand on doit donner plusieurs coups d'outils de coupe sur des dizaines de produits avant leur introduction dans le four.

C'est pourquoi, il a déjà été proposé des machines dans le but de rendre plus facile le grignage des produits de boulangerie et de viennoiserie.

On connaît en particulier une machine présentant une tête fixe associée à chaque alvéole du filet et portant un outil de coupe mobile entraîné par une courroie sans fin. Le produit à grigner est introduit dans la machine par une de ses extrémités et y reçoit une première grigne au passage de l'outil de coupe. Puis, pendant que l'outil effectue un cycle de son trajet, le produit est déplacé d'un pas d'avance correspondant à la distance prévue entre deux grignes consécutives, et reçoit une deuxième grigne au deuxième passage de l'outil de coupe. Et ainsi de suite.

Ce type de machine connue, si elle apporte une certaine automaticité, reste cependant très limité du fait de l'avance par pas du produit lors du grignage et la réalisation des grignes une par une, ce qui ne réduit pas considérablement le temps affecté à l'opération de grignage dans la chaîne d'élaboration des produits.

Des machines de ce type sont décrites dans les demandes de brevet français n° 2 410 438 et n° 2 625 648.

Aussi, le problème technique à résoudre par l'objet de la présente invention est de proposer une machine à grigner des produits de boulangerie ou de viennoiserie disposés dans un filet comportant une pluralité d'alvéoles, ladite machine comprenant d'une part, une pluralité de têtes mobiles aptes à être placées respectivement en regard de chacune des alvéoles, et munies chacune d'une pluralité de lames de coupe et d'autre part, des moyens de déplacement desdites têtes mobiles qui sont commandés par des moyens d'entraînement. Une telle machine permettrait d'obtenir une diminution notable de la durée de l'opération de grignage par rapport aux machines existant actuellement. Bien entendu, il peut s'agir également d'un filet plat ou moule métallique.

La solution au problème technique posé consiste, selon la présente invention, en ce que ladite machine comprend des moyens de déplacement des têtes mobiles aptes à actionner simultanément tout ou partie des lames de coupe, pour la réalisation de toutes les grignes de tous les produits présents dans les alvéoles du filet en une seule opération, au cours de laquelle, un moyen de blocage agit sur le filet afin d'éviter à celui-ci tout mouvement pendant le grignage.

L'économie de temps qui en résulte, par comparaison avec la machine comme mentionnée plus haut, est égale au nombre total de grignes par alvéoles, soit un facteur de 5 à 10 environ.

Comme on le verra en détail plus loin, un mode de réalisation particulier de la machine conforme à l'invention prévoit que lesdits moyens de déplacement des têtes mobiles sont constitués par un premier chariot mobile, dans une première direction, par rapport à un cadre fixe, et par un deuxième chariot mobile, dans une deuxième direction perpendiculaire à la première, par rapport au premier chariot et portant lesdites têtes mobiles.

Avantageusement, selon l'invention, ladite machine comporte des moyens de réglage de course pour chacun desdits chariots mobiles, aptes à définir un angle de grignage donné. On peut ainsi non seulement régler la course des chariots mobiles en fonction des produits à grigner, mais également l'angle de grignage qui est une caractéristique spécifique auxdits produits, par combinaison des courses des deux chariots.

D'une manière générale, il est prévu par l'invention que ladite machine comporte des moyens d'escamotage des lames de coupe entre une position de grignage et une position de repos. Et même, plus particulièrement, on envisage que ladite machine comporte des moyens de condamnation permanente de chaque lame de coupe. Cette dernière disposition présente l'avantage de pouvoir neutraliser à volonté certaines lames de coupe, par exemple dans le cas où deux grignes consécutives doivent être très espacées ou également dans le cas où plusieurs produits se trouvent sur la même alvéole du filet.

Selon un mode de réalisation particulier de l'invention, ladite machine comporte un cadre de chargement frontal destiné à recevoir ledit filet des produits à grigner. Cette configuration permet de prévoir qu'avantageusement ladite machine comporte un moyen de basculement dudit cadre de chargement pour un déchargement frontal dudit filet. Pour l'opérateur, la manipulation du filet est très pratique puisqu'il peut l'introduire de manière frontale dans la machine pour grignage et le recevoir également de manière frontale après grignage des produits.

D'autres particularités et avantages de l'invention apparaîtront clairement à la lecture de la description qui va suivre, illustrée par les dessins annexés, donnés à titre d'exemples non limitatifs.
- la figure 1 est une vue d'ensemble en perspective d'une machine à grigner conforme à l'invention;
- la figure 2 est une vue schématique de dessus des chariots mobiles de la machine à grigner de la figure 1;
- la figure 3a est une vue de côté d'une tête mobile de la machine à grigner de la figure 1;
- la figure 3b est une vue de dessus de la tête mobile de la figure 3a;
- la figure 4 est une vue en perspective des moyens de réglage de la course du deuxième chariot mobile de la machine à grigner conforme à l'invention, représentés schématiquement sur la figure 2;
- la figure 5 est une vue de dessus de produits portant différents types de grignes obtenus à l'aide de la machine, objet de l'invention;
- la figure 6a est une vue de côté d'une tête mobile de la machine de l'invention, toutes les lames de coupe étant en position de grignage;
- la figure 6b est une vue de côté d'une tête mobile de la machine de l'invention, les lames de coupe étant alternativement en position de grignage et en position de condamnation permanente;
- la figure 7 est une vue de côté de la machine à grigner de la figure 1.

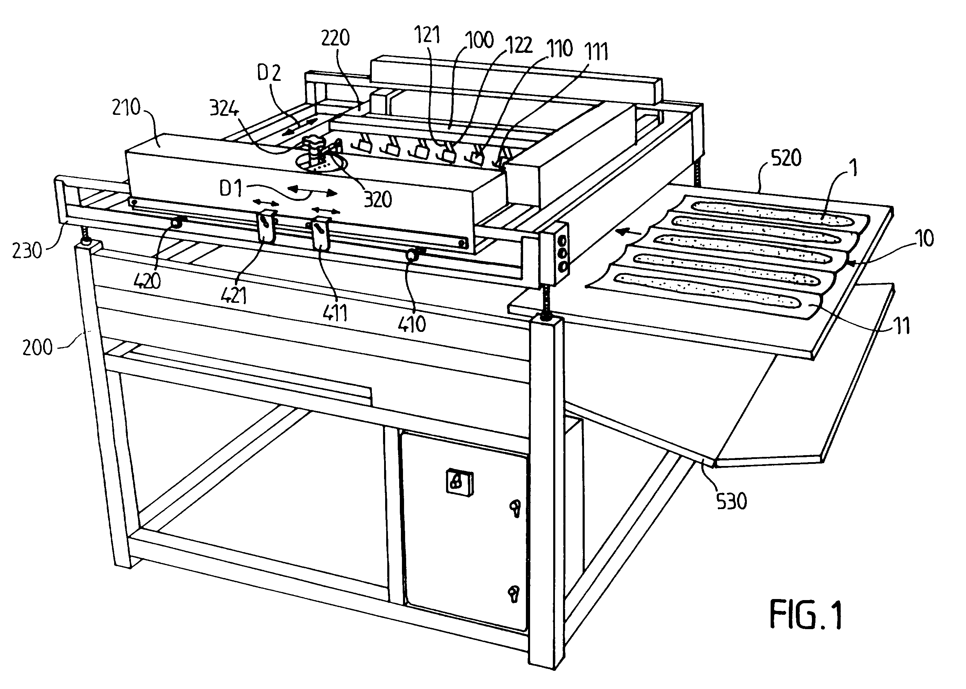

La machine représentée en perspective sur la figure 1 est destinée à grigner des produits 1 de boulangerie ou de viennoiserie, tels que baguettes, batards, petits pains, etc., disposés dans un filet 10 comportant une pluralité d'alvéoles 11.

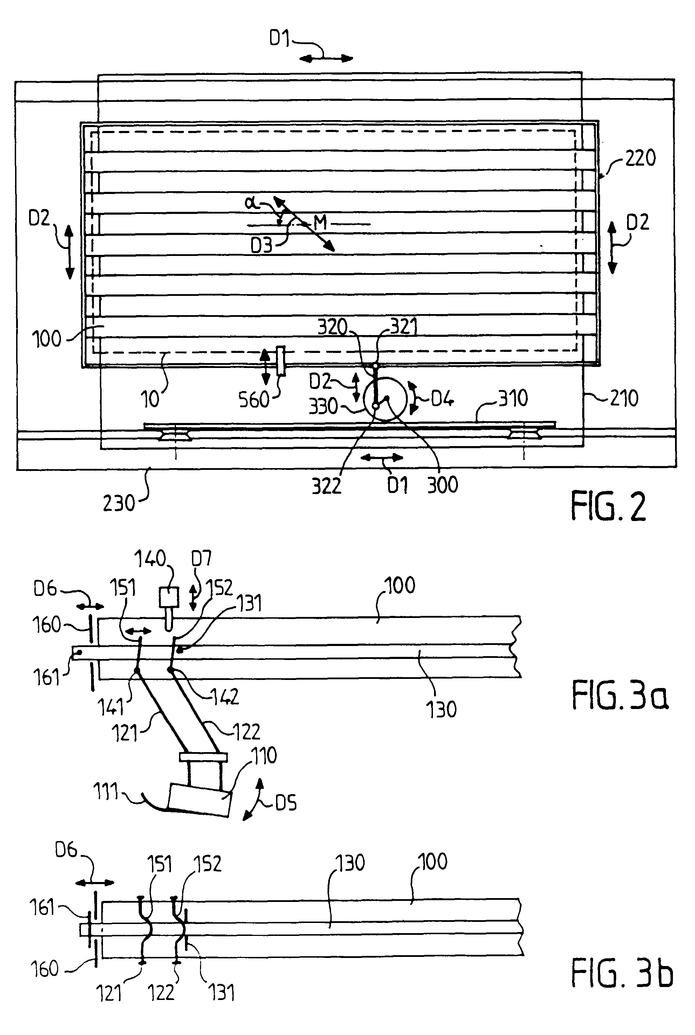

Comme l'indiquent les figures 1 et 2, ladite machine comprend une pluralité de têtes mobiles 100, dont une seule est montrée sur la figure 1, chacune desdites têtes mobiles étant aptes à être placée en regard d'une alvéole 11 du filet 10. A cet égard, il faut signaler que des moyens peuvent être prévus pour adapter la position des têtes mobiles en fonction du type de filet utilisé de manière à s'assurer de pouvoir toujours placer lesdites têtes mobiles en regard des alvéoles. On sait par exemple qu'il existe deux dimensions standard de largeur de filet, à savoir 90 et 60 cm.

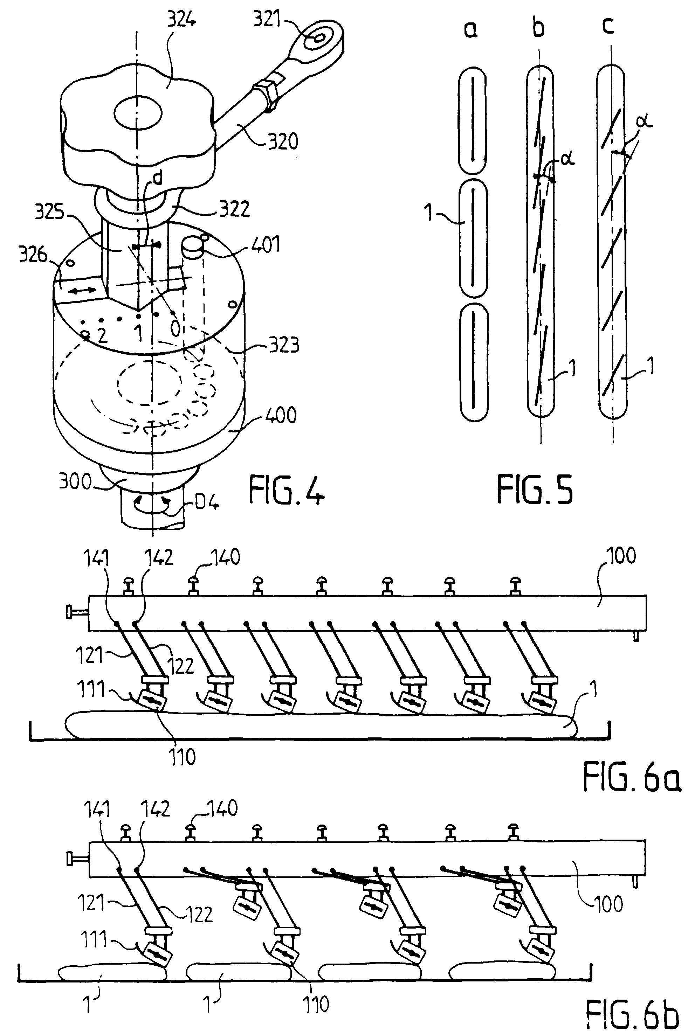

On peut voir sur la figure 1, ainsi que sur les figures 3a, 6a et 6b, que chaque tête mobile 100 est munie d'une pluralité de lames 110 de coupe, telles que simples lames de rasoir. Dans le mode de réalisation représenté sur les figures précitées, chacune desdites lames 110 de coupe est fixée sur un patin 111 en extrémité de deux étriers 121, 122 librement articulés à la tête mobile 100 correspondante.

Chacune desdites lames 110 est respectivement fixée sur un patin 111 par l'intermédiaire d'un moyen de réglage rotatif constitué par un axe central et d'une butée angulaire par rapport à laquelle est donné l'angle de la lame en fonction de la profondeur de coupe souhaitée.

La machine à grigner, objet de l'invention, comporte également des moyens de déplacement des têtes mobiles 100 pour un grignage simultané de chacun des produits 1 sous l'action des lames 110 de coupe.

Selon le mode de réalisation illustré sur les figures 1 et 2, lesdits moyens de déplacement des têtes mobiles 100 sont constitués, d'une part, par un premier chariot mobile 210 par rapport à un cadre fixe 230 placé sur un bâti 200. La direction du mouvement du premier chariot mobile 210 est représentée par la double flèche D1. D'autre part, un deuxième chariot mobile 220 portant les têtes mobiles 100 est apte à se déplacer par rapport au premier chariot 210 dans une direction, représentée par la double flèche D2, perpendiculaire à la première direction D1. On comprend que de cette manière un point courant M des têtes mobiles 100 puisse se déplacer, sous l'effet combiné des mouvements des chariots mobiles 210 et 220, dans une direction oblique, représentée par la double flèche D3 sur la figure 2, correspondant au tracé des grignes sur les produits 1. On notera α l'angle de grignage formé par les directions D1 et D3.

Les deux chariots mobiles 210 et 220 sont mus par un moyen d'entraînement unique constitué par un arbre-moteur 300 disposé verticalement et solidaire d'un moto-réducteur, non représenté. L'ensemble formé par le moto-réducteur et l'arbre-moteur 300 est installé sur le chariot mobile 210.

L'arbre-moteur 300 coopère, par l'intermédiaire d'une roue dentée 330, avec une crémaillère 310, telle qu'une chaîne, placée le long du cadre fixe 230. Lorsque le moto-réducteur est en marche, l'arbre-moteur 300 entraîne la roue dentée 330 dans une direction de rotation, représentée par la double flèche D4, ce qui produit, du fait de l'engrèment de la roue dentée 330 avec la crémaillère 310, le mouvement de chariot mobile 210 dans la direction D1.

Ainsi que le montrent les figures 2 et 4, un bras 320 est articulé au deuxième chariot mobile 220 à une première extrémité 321 et est monté excentrique à une deuxième extrémité 322 en bout de l'arbre-moteur 300. Au cours de la rotation dudit arbre-moteur 300, la deuxième extrémité 322 du bras 320 tourne autour de l'axe de l'arbre-moteur et entraîne ledit bras 320, et donc le deuxième chariot mobile 220, dans un mouvement relatif par rapport au premier chariot mobile, parallèle à la direction D2.

Bien entendu, la machine à grigner selon l'invention doit pouvoir permettre d'obtenir des inclinaisons de grignes variables en fonction du type de produits à grigner. Sur la figure 5, on a montré en a) des petits pains portant une grigne unique d'angle nul, tandis qu'en b) et c) sont représentés des produits du type baguette ou batard, sur lesquels sont tracées des grignes multiples à faible (figure 5b) ou fort (figure 5c) angle *α* de grignage.

C'est pourquoi il est prévu des moyens de réglage de la course de chacun des chariots mobiles 210, 220, aptes à définir un angle α de grignage donné.

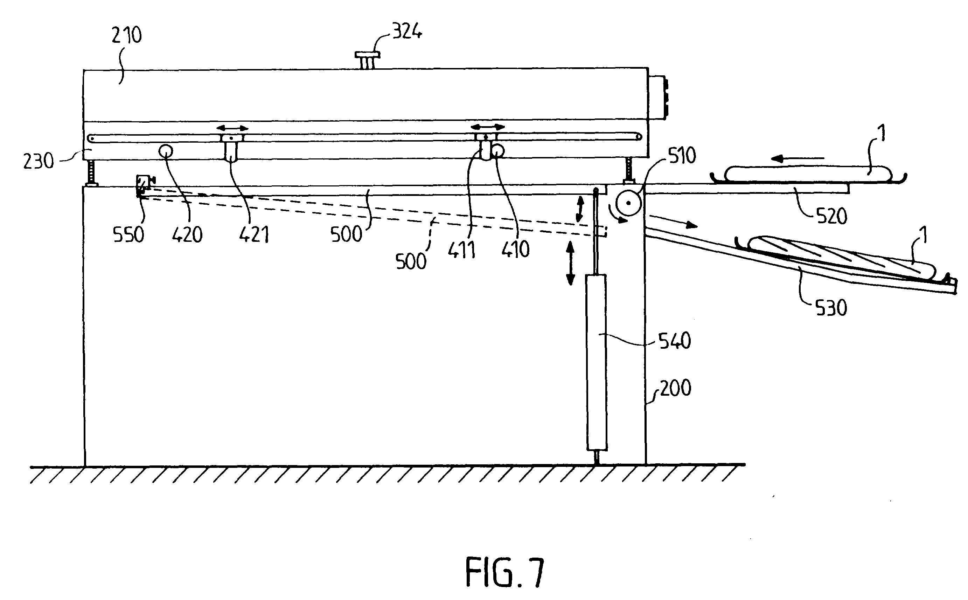

Les figures 1 et 7 montrent un mode particulier de réalisation des moyens de réglage de la course du premier chariot mobile 210, lesquels sont constitués par deux capteurs photoélectriques ou détecteurs inductifs 410, 420 fixés sur le cadre fixe 230 parallèlement à la direction D1 de déplacement, et par deux curseurs 411, 421 réglables en position sur le premier chariot 210 également parallèlement à la direction D1 et formant respectivement cache pour lesdits capteurs photoélectriques ou détecteurs inductifs 410, 420. En fait, la position du premier curseur 411 définit la position de démarrage de grignage du premier chariot 210, cette position étant ajustée en fonction de la longueur des produits à grigner. Dès le démarrage de la machine, le moto-réducteur d'entraînement produit un déplacement du premier chariot 210 qui amène en coïncidence le premier curseur 411 avec le capteur photoélectrique 410. Le deuxième curseur 421 définit la course proprement dite du premier chariot 210, celle-ci étant mesurée par la distance entre le deuxième curseur 421 et le capteur photoélectrique 420, le premier chariot 210 étant en position de démarrage.

La figure 4 montre un mode particulier de réalisation des moyens de réglage de la course du deuxième chariot mobile 220, lesquels sont constitués par un cylindre excentrique 323 permettant le réglage de l'excentrement du bras 320. Plus précisément, l'extrémité 322 du bras 320 est articulé à une tige 325 apte à être déplacée dans une fente radiale 326 aménagée dans l'excentrique 323. La position de la tige 325 peut donc être réglée continuement entre une position "0" à excentrement nul correspondant à un angle α de grignage nul pour obtenir des produits à une seule grigne longitudinale (figure 5a) et une position extrême par exemple "2" à excentrement maximum pour obtenir des produits à fort angle *α* de grignage (figure 5c). Le réglage de la tige 325 dans la fente 326 se fait en desserrant puis en serrant la poignée de serrage 324.

Il est également prévu que l'excentrique 323 lui-même soit monté réglable autour de l'arbre-moteur 300 par l'intermédiaire du barillet 400 et solidaire de l'arbre et de la vis molletée 401de manière à pouvoir placer la fente 326 dans une position définie de démarrage, généralement perpendiculaire à la direction D1 de déplacement du premier chariot 210.

Sur les figures 3a et 3b on peut voir que les lames 110 de coupe peuvent être escamotées entre une position de grignage, comme celle représentée sur la figure 3a, et une position de repos où, à la suite d'une rotation selon la double flèche D5, les lames 110 se trouvent relevées contre la tête mobile 100. Dans cette position de repos, les lames 110 de coupe ne sont pas opérationnelles. L'intérêt de cette disposition apparaîtra un peu plus loin dans la description, en relation avec le cycle de fonctionnement de la machine.

Les moyens d'escamotage des lames 110 de coupe représentés sur les figures 3a et 3b sont constitués, pour chaque tête mobile 100, d'une tringle longitudinale 130 mobile axialement le long de la direction D6, et munie d'ergots 131 de basculement des étriers 121, 122 autour des points fixes 141, 142.

Au-delà desdits points fixes 141, 142, les étriers 121, 122 se terminent par des arceaux 151, 152 entourant la tringle longitudinale 130. Lorsque cette dernière est tirée vers l'extérieur de la tête mobile 100, au moyen par exemple d'une plaque 160, actionnée par exemple par un vérin, venant en appui sur un ergot 161, l'ergot 131 de basculement entraîne l'arceau 152, ce qui provoque l'escamotage des étriers 121, 122 autour des points fixes 141, 142.

On remarquera également sur la figure 3a la présence d'un moyen de condamnation permanente de chaque lame 110 de coupe constitué, d'une façon générale, d'un moyen de blocage des étriers 121, 122 en position escamotée de repos. Dans l'exemple de la figure 3a, ledit moyen de blocage est une simple tige 141 qui a pour fonction de maintenir l'arceau 152 en position d'escamotage indépendamment du mouvement de la tringle longitudinale 130. On peut ainsi, lorsque cela est nécessaire, neutraliser complètement certaines lames 110 de coupe. Sur la figure 6a, s'agissant d'un produit 1 de grande longueur, toutes les lames 110 de coupe sont utilisées, tandis que sur la figure 6b, les produits 1 étant plus courts et ne devant recevoir qu'une seule grigne, une lame 110 sur deux sont condamnées à l'aide des tiges 140.

Comme le montre la figure 7, la machine à grigner conforme à l'invention comporte un cadre 500 de chargement frontal destiné à recevoir le filet 10 de produits à grigner. On peut voir également sur cette même figure que des rouleaux 510 d'entraînement sont placés à l'entrée de la machine afin de faciliter l'introduction du filet 10 sur ledit cadre 500 de chargement. Ainsi, il suffit à l'opérateur de poser le filet 10 sur une plate-forme 520 d'entrée et de le pousser sur les rouleaux 510 pour que ledit filet soit amené automatiquement sur le cadre 500 de chargement. Il est évident qu'un tel agencement pourrait aisément être remplacé par un convoyeur continu sur ligne automatisée.

La figure 7 montre également que la machine de l'invention comporte un moyen 540 de basculement, ici un vérin pneumatique, dudit cadre 500 de chargement pour un déchargement frontal du filet. L'opérateur peut ainsi recevoir directement après grignage le filet 10 sur une plate-forme 530 de réception située en-dessus de la plate-forme 520 d'entrée.

Lorsqu'il est introduit dans la machine à grigner, le filet 10 est poussé sur le cadre 500 de chargement par les rouleaux 510 d'entraînement jusqu'à venir en contact avec un détecteur 550 de chargement dudit filet 10.

Ledit détecteur 550 de chargement est alors apte à commander, par l'intermédiaire de moyens électroniques classiques, le fonctionnement d'un certain nombre d'organes de la machine à grigner, objet de l'invention. En particulier, dès que le chargement du filet 10 est détecté, un moyen 560 de blocage latéral, un vérin par exemple, est commandé afin de maintenir fermement le filet 10 en position sur le cadre 500 de chargement et d'éviter ainsi tout mouvement dudit filet pendant le grignage.

Dans le même temps, le détecteur 550 de chargement déclenche la mise en route du moto-réducteur d'entraînement de l'arbre-moteur 300 de commande des chariots 210, 220 de déplacement des têtes mobiles 100. Simultanément, les lames 110 de coupe, qui étaient initialement escamotées en position de repos afin de ne pas gêner le chargement du filet 10 sur le cadre 500, sont libérées et placées en position de grignage, ceci par action de la plaque 160 reliant toutes les tringles 130 des têtes mobiles 100. Le grignage des produits 1 peut alors s'effectuer.

En fin de grignage, un détecteur de fin de course des chariots 210, 220, ici le capteur photoélectrique 420 associé au curseur 421, commande le moto-réducteur et l'arbre-moteur 300 pour un retour des chariots mobiles en position initiale ou de fin de cycle, repérée par la coïncidence du capteur photoélectrique 410 et du curseur 411. Au même moment, la plaque 160 d'escamotage est commandée par un vérin par exemple, de manière à ramener les lames 110 de coupe en position de repos, avant déchargement du filet 10.

Le retour des chariots 210, 220 est repéré par un détecteur de fin de cycle, constitué par le capteur photoélectrique 410 et le curseur 411, qui commande, d'une part, la libération du moyen 560 de blocage latéral du filet 10, et, d'autre part, le vérin 540 de basculement du cadre 500 de chargement permettant de recevoir le filet des produits 1 sur la plate-forme 530 de réception frontale.

Selon un perfectionnement de l'invention, non représenté, la machine à grigner, précédemment décrite comporte en outre, de façon optionnelle, une tête fixe porte-lames disposée sur une partie du cadre fixe 230, transversalement à la direction D1, correspondant au déplacement longitudinal du filet 10 comportant les produits 1. Ceux-ci sont disposés dans les alvéoles 11 s'étendant dans le sens longitudinal mais réparties côte à côte dans un sens transversal.

La tête fixe comporte une lame de coupe par ligne longitudinale d'alvéoles et dont disposés en regard de celle-ci.

De cette manière, dans le cas de petits pains de faible longueur sur lesquels n'est effectuée qu'une seule grigne longitudinale et non oblique, celle-ci se réalise automatiquement sur les petits pains logés dans les alvéoles, lors du défilement longitudinal du filet.

Comme précédemment, sont prévus des moyens d'escamotage des lames de coupe entre une position de grignage et une position de repos.

Peuvent aussi être prévus des moyens de condamnation permanente de chaque lame de coupe.

Chaque lame de coupe est fixée en extrémité d'au moins un étrier librement articulé à la tête mobile correspondante.

Ce dernier perfectionnement apporté à la machine à grigner selon l'invention, permet de rendre celle-ci universelle, c'est-à-dire, lui permettant d'assurer le grignage de tous produits de boulangerie et de viennoiserie et quelle que soit l'orientation de la grigne à réaliser.

## Revendications

1. Machine à grigner des produits (1) de boulangerie ou de viennoiserie disposés dans un filet comportant une pluralité d'alvéoles (11), ladite machine comprenant d'une part, une pluralité de têtes mobiles (100), aptes à être placées respectivement en regard de chacune des alvéoles (11), et munies, chacune, d'une pluralité de lames de coupe (110), et, d'autre part, des moyens de déplacement desdites têtes mobiles (100) qui sont commandés par des moyens d'entraînement (300), caractérisée en ce que le filet étant fixe, lesdits moyens de déplacement des têtes mobiles (100) sont constitués par un premier chariot mobile (210), dans une première direction (D1), par rapport à un cadre fixe (230), et par un deuxième chariot mobile (220), dans une deuxième direction (D2) perpendiculaire à la première, par rapport au premier chariot (40) et portant lesdites têtes mobiles (100), de manière à ce qu'un point courant M de chacune des têtes mobiles (100) puisse se déplacer, sous l'effet combiné des mouvements de chariots mobiles (210 et 220), dans une direction oblique (D3), afin d'effectuer simultanément toutes les grignes de tous les produits présents dans les alvéoles du filet en une seule opération.

2. Machine à grigner selon la revendication 1, caractérisée en ce que ladite machine comprend un moyen d'entraînement unique desdits chariots mobiles constitué par un arbre-moteur (300) solidaire dudit premier chariot (210) et coopérant avec une crémaillère (310) disposée sur ledit cadre fixe (230), et sur lequel est monté excentrique un bras (320) articulé audit deuxième chariot(220).

3. Machine à grigner selon l'une des revendications 1 ou 3, caractérisée en ce que ladite machine comporte des moyens de réglage de course pour chacun desdits chariots mobiles (210, 220), aptes à définir un angle (α) de grignage donné.

4. Machine à grigner selon la revendication 3, caractérisée en ce que lesdits moyens de réglage de course de premier chariot (210) sont constitués par deux capteurs photoélectriques (410, 420) fixés sur ledit cadre fixe (230) parallèlement à ladite première direction (D1) et par deux curseurs (411, 421) réglables en position sur ledit premier chariot (210) parallèlement à ladite première direction (D2) et formant respectivement cache pour lesdits capteurs photoélectriques (410, 420).

5. Machine à grigner selon l'une des revendications 3 ou 5, caractérisée en ce que lesdits moyens de réglage de course du deuxième chariot (220) sont constitués par un excentrique (323) monté réglable autour dudit arbre-moteur (300) par l'intermédiaire du barillet (400) et de la vis moletée (401) et dans lequel ledit bras articulé (320) est monté réglable excentriquement.

6. Machine à grigner selon l'une quelconque des revendications 1 à 5, caractérisée en ce que ladite machine comporte des moyens (130) d'escamotage des lames (110) de coupe entre une position de grignage et une position de repos.

7. Machine à grigner selon l'une quelconque des revendications 1 à 6, caractérisée en ce que ladite machine comporte des moyens (140) de condamnation permanente de chaque lame (110) de coupe.

8. Machine à grigner selon l'une quelconque des revendications 1 à 7, caractérisée en ce que chaque lame (110) de coupe est fixée en extrémité d'au moins un étrier (121, 122) librement articulé à la tête mobile (100) correspondante.

9. Machine à grigner selon les revendications 6 et 8, caractérisée en ce que lesdits moyens d'escamotage sont constitués, pour chaque tête mobile (100), d'une tringle longitudinale (130) mobile axialement, munie de moyens (181) de basculement desdits étriers (121,122).

10. Machine à grigner selon les revendications 7 et 8, caractérisée en ce que desdits moyens de condamnation permanente sont des moyens (140) de blocage des étriers (121, 122) en position escamotée de repos.

11. Machine à grigner selon l'une quelconque des revendications 1 à 10, caractérisée en ce que ladite machine comporte un cadre (500) de chargement frontal destiné à recevoir ledit filet (10) de produits (1) à grigner.

12. Machine à grigner selon la revendication 11, caractérisée en ce que ladite machine comporte au moins un rouleau (510) d'entraînement pour introduire ledit filet (10) sur ledit cadre (500) de chargement.

13. Machine à grigner selon l'une des revendications 11 ou 12, caractérisée en ce que ladite machine comporte un moyen (540) de basculement dudit cadre (500) de chargement pour un déchargement frontal dudit filet (10).

14. Machine à grigner selon l'une quelconque des revendications 11 à 13, caractérisée en ce que ladite machine comporte un détecteur (550) de chargement du filet (10) sur ledit cadre (500) de chargement.

15. Machine à grigner selon la revendication 14, caractérisée en ce que ledit détecteur (550) de chargement est apte à commander lesdits moyens (300) d'entraînement desdits moyens (210, 220) de déplacement des têtes mobiles (100).

16. Machine à grigner selon l'une des revendications 14 ou 15, caractérisée en ce que ledit détecteur (550) de chargement est apte à commander lesdits moyens (130) d'escamotage de manière à libérer les lames (110) de coupe en position de grignage après chargement du filet (10).

17. Machine à grigner selon l'une quelconque des revendications 14 à 16, caractérisée en ce que ledit détecteur (550) de chargement est apte à commander un moyen (560) de blocage latéral du filet (10) en position sur le cadre (500) de chargement.

18. Machine à grigner selon l'une quelconque des revendications 1 à 17, caractérisée en ce que ladite machine comporte un détecteur (420, 421) de fin de course des moyens (210, 220) de déplacement apte à commander lesdits moyens (300) d'entraînement pour un retour desdits moyens de déplacement en position initiale ou de fin de cycle.

19. Machine à grigner selon la revendication 18, caractérisée en ce que ledit détecteur de fin de course est apte à commander lesdits moyens (130) d'escamotage de manière à ramener les lames (110) de coupe en position de repos avant déchargement du filet (10).

20. Machine à grigner selon la revendication 19, caractérisée en ce qu'un détecteur (410, 411) de fin de cycle est apte à libérer ledit moyen (560) de blocage latéral du filet (10).

21. Machine à grigner selon l'une des revendications 19 ou 20, caractérisée en ce que ledit détecteur de fin de cycle est apte à commander ledit moyen (540) de basculement du cadre (500) de chargement.

## Patentansprüche

1. Maschine zum Ritzen von Bäckerei- oder Konditoreiprodukten (1), die in einem Netz angeordnet sind, das eine Vielzahl von Öffnungen (11) umfasst, wobei diese Maschine einerseits eine Vielzahl von beweglichen Köpfen (100), die in der Lage sind, jeweils gegenüber jeder der Öffnungen (11) angeordnet zu werden und jeweils mit einer Vielzahl von Schneidblättern (110) versehen sind, und andererseits Mittel zum Verschieben dieser beweglichen Köpfe (100) umfasst, die durch Antriebsmittel (300) gesteuert werden, dadurch gekennzeichnet, dass das Netz feststehend ist und dass die Verschiebemittel für die beweglichen Köpfe (100) aus einem ersten Schlitten (210), der in Bezug auf einen festen Rahmen (230) in einer ersten Richtung (D1) beweglich ist, und aus einem zweiten Schlitten (220), der in Bezug auf den ersten Schlitten (40), der die beweglichen Köpfe (100) trägt, in einer zweiten Richtung (D2), die zu der ersten senkrecht verläuft, beweglich ist, gebildet sind, so dass sich ein Laufpunkt M jedes der beweglichen Köpfe (100) unter der kombinierten Wirkung der Bewegungen der beweglichen Schlitten (210 und 220) in einer schrägen Richtung (D3) verschieben kann, um gleichzeitig alle Ritzungen aller in den Öffnungen des Netzes vorhandenen Produkte in einem einzigen Arbeitsgang herstellen zu können.

2. Maschine zum Ritzen nach Anspruch 1, dadurch gekennzeichnet, dass die Maschine ein einziges Antriebsmittel für die beweglichen Schlitten umfasst, das aus einer Motorwelle (300) gebildet ist, die mit dem ersten Schlitten (210) fest verbunden ist und mit einer Zahnstange (310) zusammenwirkt, die auf dem festen Rahmen (230) angeordnet ist, und an der ein Arm (320) exzentrisch montiert ist, der an dem zweiten Schlitten (220) angelenkt ist. der ein Arm (320) exzentrisch montiert ist, der an dem zweiten Schlitten (220) angelenkt ist.

3. Maschine zum Ritzen nach einem der Ansprüche 1 oder 3, dadurch gekennzeichnet, dass die Maschine Mittel zur Wegeinstellung für jeden der beweglichen Schlitten (210, 220) aufweist, die in der Lage sind, einen gegebenen Ritzwinkel (α) zu definieren.

4. Maschine zum Ritzen nach Anspruch 3, dadurch gekennzeichnet, dass die Mittel zur Wegeinstellung des ersten Schlittens (210) aus zwei photoelektrischen Zellen (410, 420), die auf dem festen Rahmen (230) parallel zu der ersten Richtung (D1) befestigt sind, und aus zwei Läufern (411, 421) gebildet sind, deren Position auf dem ersten Schlitten (210) parallel zu der ersten Richtung (D2) einstellbar ist und die jeweils eine Abdeckung für die photoelektrischen Zellen (410, 420) bilden.

5. Maschine zum Ritzen nach einem der Ansprüche 3 oder 5, dadurch gekennzeichnet, dass die Mittel zur Wegeinstellung des zweiten Schlittens (220) aus einem Exzenter (323) gebildet sind, der mit Hilfe des Zylinders (400) und der Rändelschraube (401) um die Motorwelle (300) einstellbar montiert ist und in dem der Gelenkarm (320) exzentrisch einstellbar montiert ist.

6. Maschine zum Ritzen nach einem der Ansprüche 1 bis 5, dadurch gekennzeichnet, dass die Maschine Mittel (130) zum Einziehen der Schneidblätter (110) in eine Position zwischen einer Ritzposition und einer Ruheposition aufweist.

7. Maschine zum Ritzen nach einem der Ansprüche 1 bis 6, dadurch gekennzeichnet, dass die Maschine Mittel (140) zur ständigen Inaktivsetzung jedes Schneidblattes (110) aufweist.

8. Maschine zum Ritzen nach einem der Ansprüche 1 bis 7, dadurch gekennzeichnet, dass jedes Schneidblatt (110) am Ende von zumindest einem Bügel (121, 122) befestigt ist, der frei am entsprechenden beweglichen Kopf (100) angelenkt ist.

9. Maschine zum Ritzen nach den Ansprüchen 6 und 8, dadurch gekennzeichnet, dass die Einziehmittel für jeden beweglichen Kopf (100) aus einer axial beweglichen Längsstange (130) gebildet sind, die mit Mitteln (181) zum Kippen der Bügel (121, 122) versehen ist.

10. Maschine zum Ritzen nach den Ansprüchen 7 und 8, dadurch gekennzeichnet, dass die Mittel zur ständigen Inaktivsetzung Mittel (140) zur Feststellung der Bügel (121, 122) in eingezogener Ruheposition sind.

11. Maschine zum Ritzen nach einem der Ansprüche 1 bis 10, dadurch gekennzeichnet, dass die Maschine einen Rahmen (500) zur frontalen Beladung aufweist, der dazu bestimmt ist, das Netz (10) von zu ritzenden Produkten (1) aufzunehmen.

12. Maschine zum Ritzen nach Anspruch 11, dadurch gekennzeichnet, dass die Maschine mindestens eine Antriebswalze (510) aufweist, um das Netz (10) in den Beladerahmen (500) einzuführen.

13. Maschine zum Ritzen nach einem der Ansprüche 11 oder 12, dadurch gekennzeichnet, dass die Maschine ein Mittel (540) zum Kippen des Beladerahmens (500) für eine frontale Entladung des Netzes (10) aufweist.

14. Maschine zum Ritzen nach einem der Ansprüche 11 bis 13, dadurch gekennzeichnet, dass die Maschine einen Detektor (550) für das Laden des Netzes (10) auf dem Beladerahmen (500) umfasst.

15. Maschine zum Ritzen nach Anspruch 14, dadurch gekennzeichnet, dass der Ladedetektor (550) in der Lage ist, die Antriebsmittel (300) der Verschiebemittel (210, 220) der beweglichen Köpfe (100) zu steuern.

16. Maschine zum Ritzen nach einem der Ansprüche 14 oder 15, dadurch gekennzeichnet, dass der Ladedetektor (550) in der Lage ist, die Einziehmittel (130) derart zu steuern, dass die Schneidblätter (110) in der Ritzposition nach dem Laden des Netzes (10) freigegeben werden.

17. Maschine zum Ritzen nach einem der Ansprüche 14 bis 16, dadurch gekennzeichnet, dass der Ladedetektor (550) in der Lage ist, ein seitliches Feststellmittel (560) des Netzes (10) in seiner Position auf dem Beladerahmen (500) zu steuern.

18. Maschine zum Ritzen nach einem der Ansprüche 1 bis 17, dadurch gekennzeichnet, dass die Maschine einen Anschlagdetektor (420, 421) für die Verschiebemittel (210, 220) aufweist, der in der Lage ist, die Antriebsmittel (300) für eine Rückkehr der Verschiebemittel in die ursprüngliche Position oder die Endposition zu steuern.

19. Maschine zum Ritzen nach Anspruch 18, dadurch gekennzeichnet, dass der Anschlagdetektor in der Lage ist, die Einziehmittel (130) derart zu steuern, dass die Schneidblätter (110) in die Ruheposition vor dem Entladen des Netzes (10) zurückgebracht werden.

20. Maschine zum Ritzen nach Anspruch 19, dadurch gekennzeichnet, dass ein Enddetektor (410, 411) in der Lage ist, das seitliche Feststellmittel (560) des Netzes (10) freizugeben.

21. Maschine zum Ritzen nach einem der Ansprüche 19 oder 20, dadurch gekennzeichnet, dass der zyklische Enddetektor in der Lage ist, das Mittel (540) zum Kippen des Beladerahmens (500) zu steuern.

## Claims

1. A machine for scoring bakery or pastry products (1) disposed in a platform having a plurality of cavities (11), the said machine comprising, firstly, a plurality of movable heads (100) adapted to be placed with each one facing a respective one of the cavities (11), each movable head being provided with a plurality of cutting blades (110), and secondly, means for displacing the said movable heads (100) which are controlled by drive means (300), characterised in that, the platform being fixed, the said means for displacing the movable heads (100) consist of a first carriage (210) which is movable in a first direction (D1) with respect to a fixed frame (230), and a second carriage (220) movable in a second direction (D2) at right angles to the first direction with respect to the first carriage (40) and carrying the said movable heads (100), so that a running point M of each of the movable heads (100) is displaceable in an oblique direction (D3) under the combined effect of the motions of the movable carriages (210 and 220), whereby to form all the scores, in all of the products present in the cavities on the platform, simultaneously in a single operation.

2. A scoring machine according to Claim 1, characterised in that the said machine includes a single drive means for the said movable carriages, consisting of a motor shaft (300) fixed to the said first carriage (210) and cooperating with a rack (310) disposed on the said fixed frame (230), and on which an arm (320), which is articulated to the said second carriage (220), is mounted eccentrically.

3. A scoring machine according to Claim 1 or Claim 2, characterised in that the said machine includes means for adjusting the travel of each of the said movable carriages (210, 220), the said means being adapted to define a given scoring angle (α).

4. A scoring machine according to Claim 3, characterised in that the said means for adjusting the travel of the first carriage (210) consist of two photoelectric sensors (410, 420) fixed on the said fixed frame (230) parallel to the said first direction (D1), together with two cursors (411, 421), which are adjustable for position on the said first carriage (210) parallel to the said first direction (D2) and which constitute respective housings for the said photoelectric sensors (410, 420).

5. A scoring machine according to Claim 3 or Claim 4, characterised in that the said means for adjusting the travel of the second carriage (220) consists of an eccentric (323) mounted in a position which is adjustable around the said motor shaft (300) by means of the barrel (400) and threaded pin (401), and in which the said articulated arm (320) is mounted adjustably and eccentrically.

6. A scoring machine according to any one of Claims 1 to 5, characterised in that the said machine includes means (130) for retracting the cutting blades (110) between a scoring position and a rest position.

7. A scoring machine according to any one of Claims 1 to 6, characterised in that the said machine includes means (140) for permanently blocking each cutting blade (110).

8. A scoring machine according to any one of Claims 1 to 7, characterised in that each cutting blade (110) is fixed at its end to at least one link (121, 122) which is freely articulated to the corresponding movable head (100) .

9. A scoring machine according to Claims 6 and 8, characterised in that the said retracting means consist, for each movable head (100), of a longitudinal bar (130) which is movable axially and which is provided with means (181) for swinging the said links (121, 122).

10. A scoring machine according to Claims 7 and 8, characterised in that the said permanent blocking means are means (140) for blocking the links (121, 122) in a retracted, rest position.

11. A scoring machine according to any one of Claims 1 to 10, characterised in that the said machine includes a front loading frame (500) for receiving the said platform (10) carrying products (1) to be scored.

12. A scoring machine according to Claim 11, characterised in that the said machine includes at least one drive roller (510) for introducing the said platform (10) on the said loading frame (500).

13. A scoring machine according to Claim 11 or Claim 12, characterised in that the said machine includes a means (540) for tilting the said loading frame (500), for frontal unloading of the said platform (10).

14. A scoring machine according to any one of Claims 11 to 13, characterised in that the said machine includes a detector (550) for detecting loading of the platform (10) on the said loading frame (500).

15. A scoring machine according to Claim 14, characterised in that the said loading detector (550) is adapted to control the said means (300) that drive the said means (210, 220) for displacing the movable heads (100).

16. A scoring machine according to Claim 14 or Claim 15, characterised in that the said loading detector (550) is adapted to control the said retracting means (130) whereby to release the cutting blades (110) in a scoring position after loading of the platform (10).

17. A scoring machine according to any one of Claims 14 to 16, characterised in that the said loading detector (550) is adapted to control a means (560) for holding the platform (10) laterally in position on the loading frame (500).

18. A scoring machine according to any one of Claims 1 to 17, characterised in that the said machine includes an end of travel detector (420, 421) for the displacement means (210, 220), adapted to control the said drive means (300) for returning the said displacement means to their initial or end-of-cycle position.

19. A scoring machine according to Claim 18, characterised in that the said end of travel detector is adapted to control the said retracting means (130) whereby to return the cutting blades (110) to the rest position before unloading of the platform (10).

20. A scoring machine according to Claim 19, characterised in that an end-of-cycle detector (410, 411) is adapted to release the said means (560) for lateral retention of the platform (10).

21. A scoring machine according to Claim 19 or Claim 20, characterised in that the said end-of-cycle detector is adapted to control the said means (540) for tilting the loading frame (500).
